# EUROPEAN PATENT APPLICATION

(11) **EP 4 838 692 A1**
(43) Date of publication of application: **11.11.2026**
(21) Application number: 25777250.9
(22) Date of filing: 07.03.2025
(51) Int. Cl.: H01M 50/691, H01M 50/507, H01M 50/204, G01F 23/24

(54) **BATTERY MODULE AND BATTERY PACK COMPRISING SAME**

(30) Priority: 27.03.2024 KR 20240042014
(71) Applicant: LG Energy Solution, Ltd., Seoul 07335 (KR)
(72) Inventor: SEON, Sang-Ok, Daejeon 34122 (KR); KIM, Jee-Won, Daejeon 34122 (KR)
(74) Representative: Hoffmann Eitle
(86) International application number: PCT/KR2025/099626
(87) International publication number: WO 2025/206928

(57) **Abstract**

Disclosed is a battery module, which includes battery cells; a module case configured to accommodate the battery cells therein and having a drain hole for draining electrolyte leaking from the battery cells; and an electrolyte discharge control device configured to block the drain hole, the electrolyte discharge control device being configured to open the drain hole for a predetermined time and then block the drain hole when a level of electrolyte inside the module case rises.

## Description

### TECHNICAL FIELD

The present disclosure relates to a battery module and a battery pack including the same, and more specifically, to a battery module having an electrolyte discharge control device capable of preventing the risk of short circuit between battery cells due to electrolyte ejected to the battery cells when a thermal event occurs, and a battery pack including the same.

The present application claims priority to Korean Patent Application No. 10-2024-0042014 filed on March 27, 2024 in the Republic of Korea, the disclosures of which are incorporated herein by reference.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Currently, the operating voltage of one lithium secondary battery cell widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

Meanwhile, if overcharge occurs in the secondary battery cell during the charge/discharge process or an internal short circuit occurs due to some factor, the temperature may rise and gas may be generated through a chemical reaction. This may cause the secondary battery cell to swell, and if this worsens, the sealing of the battery case may be broken, causing electrode particles and electrolyte to be discharged. If the electrolyte is filled to a predetermined height inside the battery module and, for example, bus bars 3 are submerged in the electrolyte W, a short circuit may occur between the secondary battery cells, which may cause a chain reaction of ignition or explosion of the secondary battery cells. Therefore, the conventional battery module may have a drain hole O to drain the electrolyte to the outside.

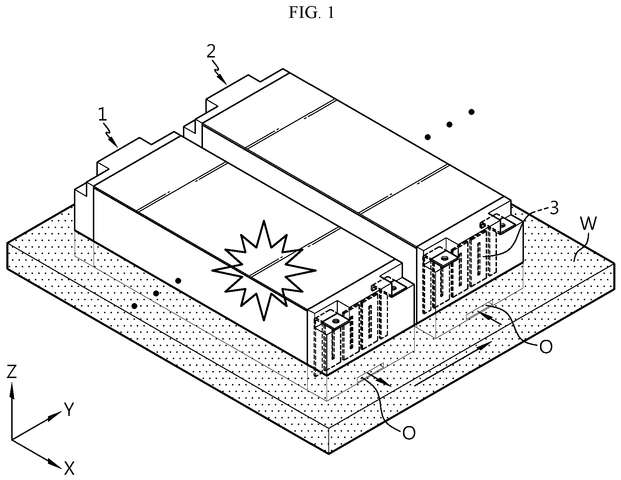

However, as shown in FIG. 1, in the case of a battery pack assembled using the battery modules, when a thermal event occurs in a certain battery module 1, the electrolyte W flowing out from the certain battery module 1 may flow into another battery module 2 through a drain hole of another battery module 2. In this case, current flow or short circuit may occur between the two battery modules 1 and 2, or an electrical problem may occur in the other battery module 2.

### DISCLOSURE

### Technical Problem

The present disclosure is designed to solve the problems of the related art, and therefore the present disclosure is directed to providing a battery module configured to prevent electrolyte from being released or from flowing back into a module case from the outside when a thermal event occurs in the battery module so that the level of electrolyte in the module case does not exceed a certain height, and a battery pack including the battery module.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: battery cells; a module case configured to accommodate the battery cells therein and having a drain hole for draining electrolyte leaking from the battery cells; and an electrolyte discharge control device configured to block the drain hole, the electrolyte discharge control device being configured to open the drain hole for a predetermined time and then block the drain hole when a level of electrolyte inside the module case rises.

The electrolyte discharge control device may include a storage tank coupled to the module case; a first blocking film configured to cover the drain hole and forming one side surface of the storage tank; a second blocking film spaced apart from the first blocking film and forming the other side surface of the storage tank; a block support film arranged in a block insert hole formed through an upper plate of the storage tank; and a blocking block having a lower end supported by the block support film to be arranged on the upper plate of the storage tank, the blocking block being configured to fall in a gravity direction to close a flow path between the first blocking film and the second blocking film provided inside the storage tank when the block support film is lost by the electrolyte, and the first blocking film, the second blocking film, and the block support film may be made of a material which is dissolved and lost in the electrolyte.

The first blocking film and the second blocking film may include a first region and a second region with different thicknesses, and the first region may be formed with a smaller thickness than the second region and be provided at a lower position than the second region.

The first region may have a thickness of 100 um to 150 um, and the second region has a thickness of 300 um or more.

The block support film may have a greater thickness than the first region.

The blocking block may be made of insulating material.

The first blocking film, the second blocking film, and the block support film may be made of at least one material among epoxy, water-soluble pulp, and bioplastic.

The electrolyte discharge control device may have a block slot formed concavely in a lower plate of the storage tank so that a lower end of the blocking block is inserted therein.

The electrolyte discharge control device may include an actuator provided on a lower plate of the storage tank to lift the blocking block in an upper direction; a level detection unit configured to detect the level of electrolyte inside the module case; and a control unit configured to control the actuator to operate based on a signal transmitted from the level detection unit.

The level detection unit may include a first conductor and a second conductor arranged to be spaced apart from each other in a horizontal direction at a predetermined height from a bottom surface of the module case; and a current detection unit configured to detect a current flowing between the first conductor and the second conductor when electrolyte come into contact with the first conductor and the second conductor.

The battery module may further comprise a bus bar frame assembly including a plurality of bus bars for electrically connecting the battery cells and a bus bar frame for supporting the plurality of bus bars; and an end cover configured to cover the bus bar frame assembly, and the drain hole may be provided at a lower end of the end cover.

The electrolyte discharge control device may be detachably coupled to the lower end of the end cover.

According to one aspect of the present disclosure, there may also be provided a battery pack including one or more battery modules described above.

### Advantageous Effects

According to the present disclosure, it is possible to provide a battery module including an electrolyte discharge control device that discharges electrolyte or prevents electrolytes from flowing back into the battery module from the outside when a thermal event occurs in the battery module so that the level of electrolyte in the module case does not exceed a certain height, and a battery pack including the battery module.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing exemplarily showing an electrolyte immersion situation of battery modules according to the prior art.
FIG. 2 is a perspective view schematically illustrating a battery module according to an embodiment of the present disclosure.
FIG. 3 is an exploded perspective view schematically showing the battery module of FIG. 2.
FIG. 4 is a cross-sectional view schematically showing an electrolyte discharge control device according to an embodiment of the present disclosure.
FIG. 5 is a diagram showing a state in which a drain hole is blocked by the electrolyte discharge control device according to an embodiment of the present disclosure.
FIG. 6 is a diagram showing a state in which a first blocking film is lost in the electrolyte discharge control device of FIG. 5.
FIG. 7 is a diagram showing a state in which a second blocking film is lost in the electrolyte discharge control device of FIG. 6.
FIG. 8 is a diagram showing a state in which a support film is lost and a blocking block is dropped in the electrolyte discharge control device of FIG. 7.
FIGS. 9 and 10 are reference views for explaining an example of operation of an electrolyte discharge control device including a level detection unit, as a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

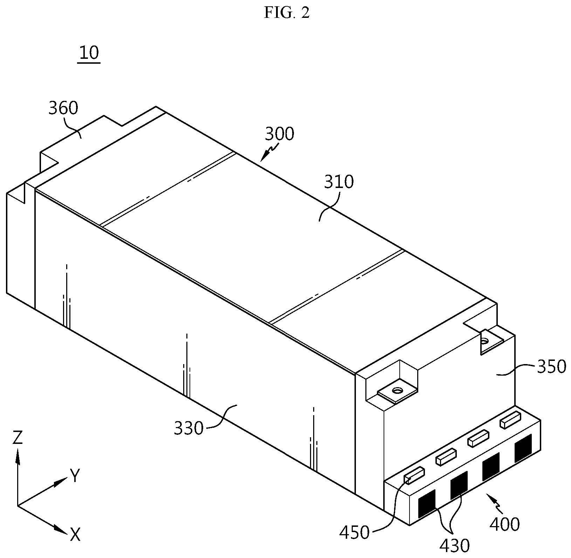

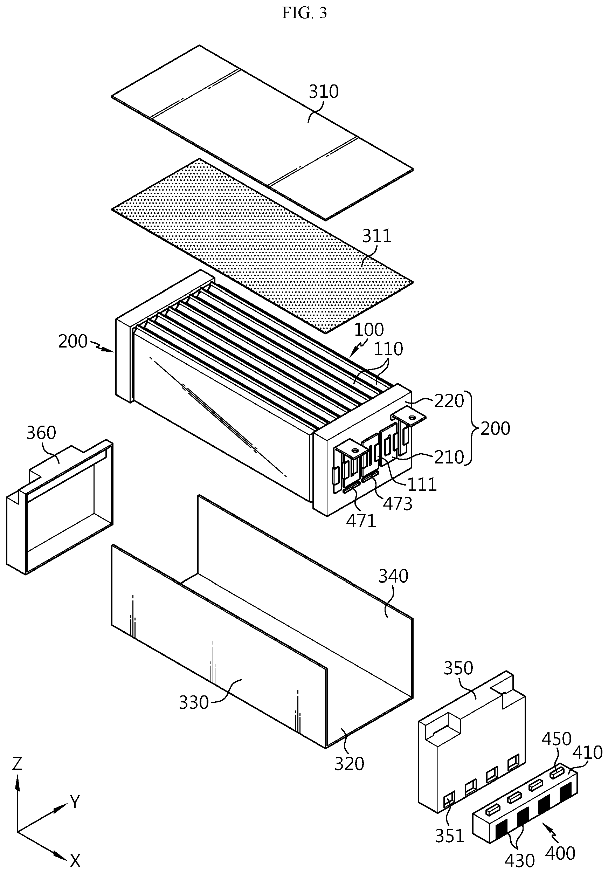

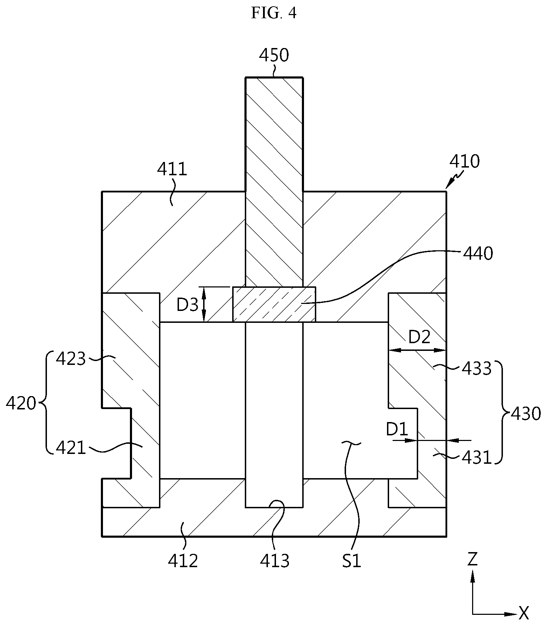

FIG. 2 is a perspective view schematically illustrating a battery module according to an embodiment of the present disclosure, FIG. 3 is an exploded perspective view schematically showing the battery module of FIG. 2, and FIG. 4 is a cross-sectional view schematically showing an electrolyte discharge control device according to an embodiment of the present disclosure.

Referring to FIGS. 2 to 4, the battery module 10 according to an embodiment of the present disclosure includes battery cells 110, a module case 300 that accommodates the battery cells 110 therein and has a drain hole 351, and an electrolyte discharge control device 400.

As described in detail later, since the battery module 10 according to the present disclosure includes the electrolyte discharge control device 400 that normally blocks the drain hole, but opens the drain hole for a predetermined time when the electrolyte level inside the module case rises to discharge the electrolyte to the outside of the module case, thereby preventing, for example, a bus bar 210 or the like from being immersed in the electrolyte W leaking from the battery cells 110. In addition, since the electrolyte discharge control device 400 is configured to block the drain hole 351 after a predetermined time has passed since the electrolyte W begins to be discharged to the outside of the battery module 10, it is possible to prevent the electrolyte W outside the battery module 10 from flowing back into the battery module 10.

Hereinafter, the main configuration of the battery module 10 according to an embodiment of the present disclosure will be described.

As the battery cell 110 according to this embodiment, as shown in FIG. 3, a pouch-type battery cell 110 that is easy to stack may be adopted. The pouch-type battery cell 110 may include an electrode lead 111, an electrode assembly, an electrolyte W, and a pouch case that hermetically stores the electrode assembly and the electrolyte W.

The pouch case may be composed of, for example, two pouch sheets. One pouch sheet has a concave groove, and the electrode assembly and the electrolyte W are put into the groove, and the groove is covered with the other pouch sheet, and then the edges of the two pouch sheets are heat-fused to hermetically accommodate the electrode assembly and the electrolyte W. In the pouch-type battery cell 110, a portion where the pouch sheets are heat-fused and sealed is called a sealing portion. The electrode lead 111 has one end connected to the electrode assembly inside the pouch case, and the other end protrudes outside the pouch case, and a portion between one end and the other end may be heat-fused and fixed between the two pouch sheets.

The portion of the electrode lead 111 protruding outside the pouch case may function as an electrode terminal of the pouch-type battery cell 110. Here, the electrode lead 111 includes a positive electrode lead 111 and a negative electrode lead 111. The pouch-type battery cell 110 may be configured such that the positive electrode lead 111 and the negative electrode lead 111 protrude in the same direction from the pouch case or in opposite directions. For reference, the pouch-type battery cell 110 of this embodiment is a pouch-type battery cell 110 in which the positive electrode lead 111 and the negative electrode lead 111 protrude in opposite directions.

The pouch-type battery cells 110, as shown in FIG. 3, may be erected in the upper and lower direction (±Z direction) and stacked in the left and right direction (±Y direction) to form a cell stack 100. The battery module 10 may have a high energy density because the cell stack 100 is accommodated in the module case 300.

The battery module 10 according to this embodiment may include a bus bar frame assembly 200 as a means for electrically connecting the pouch-type battery cells 110.

The bus bar frame assembly 200 generally includes a bus bar frame 220, which is a plastic injection molded product, and bus bars 210, which are provided in the form of metal bars such as copper, aluminum, or nickel having electrical conductivity, and may be arranged at the front and/or rear of the cell stack 100.

The bus bar frame 220 may be provided in an approximately plate-shaped shape and have slits formed on an outer surface at which the bus bars 210 may be fixed and the electrode leads 111 may be removed. The electrode leads 111 of the pouch-type battery cells 110 may be drawn outward from the bus bar frame 220 through the corresponding slits and may be contacted and fixed to the corresponding bus bars 210 in a predetermined pattern. Laser welding may be performed between the bus bars 210 and the electrode leads 111.

For example, the positive electrode leads of N (N is a natural number) pouch-type battery cells 110 and the negative electrode leads of other N pouch-type battery cells 110 are welded to the same bus bar 210, so that the pouch-type battery cells 110 may be connected in series and/or in parallel.

Meanwhile, the battery cell 110 constituting the battery module 10 according to the present disclosure does not necessarily have to be a pouch-type secondary battery. It is disclosed in advance that the pouch-type secondary battery is an example of the battery cell 110 that may be applied to the battery module 10 of the present disclosure. In other words, any type of secondary battery disclosed at the time of filing of this application may be the battery cell 110 constituting the battery module 10 according to the present disclosure. For example, the pouch-type battery cell 110 may be replaced with a cylindrical battery cell 110 or a rectangular battery cell 110 having an outer case in the form of a metal can. In this case, unlike this embodiment, the bus bar frame assembly 200 may be modified or replaced with another structure suitable for electrically connecting the cylindrical battery cells 110 or the rectangular battery cells 110.

The module case 300 may be made of a material with high mechanical strength to protect the battery cells 110 from external impact, etc.

Referring to FIGS. 2 and 3, the module case 300 according to an embodiment of the present disclosure includes a top plate 310 covering an upper portion of the cell stack 100, a bottom plate 320 covering a lower portion of the cell stack 100, a pair of side plates 330, 340 covering both side portions of the cell stack 100, and a pair of end covers 350, 360 covering a bus bar frame assembly 200 coupled to the front and rear portions of the cell stack 100. An insulating sheet 311 for insulation between the battery cells 110 and the top plate 310 may be optionally attached to the lower surface of the top plate 310.

The bottom plate 320 and the pair of side plates 330, 340 may be provided as an integral part. As in this embodiment, the bottom plate 320 and the pair of side plates 330, 340 provided as an integral part are referred to as a U-frame.

For example, the cell stack 100 coupled with the bus bar frame assembly 200 may be disposed in the U-frame, and the top plate 310 210 may be disposed on the upper portion of the cell stack 100. At this time, the top plate 310 and the U-frame may be coupled to each other by welding, bolting, hooking, etc. If the top plate 310 and the U-frame are coupled, a case body having an approximate rectangular tube shape may be prepared.

The pair of end covers 350, 360 may be configured to cover the front opening and the rear opening of the case body. The bus bar frame assembly 200 may be covered by the end covers 350, 360 and may not be exposed to the outside. One end cover 350 of the pair of end covers 350, 360 may have a terminal slit at its upper side. Some of the bus bars 210 may be exposed to the upper side of the end cover 350 through the terminal slit, and the exposed portions may function as a positive electrode terminal and a negative electrode terminal of the battery module 10. In addition, the end cover 350 may have one or more drain holes 351 formed through the lower end. The drain hole 351 may be used to drain the electrolyte W discharged from the battery cells 110 to the outside when a thermal event occurs inside the battery module 10.

Meanwhile, as shown in FIG. 3, the electrolyte discharge control device 400 may cover the drain hole 351 and be coupled to the lower end of the end cover 350. The electrolyte discharge control device 400 may be provided to be detachable from the end cover 350 for convenience of maintenance. Although not shown in detail, the electrolyte discharge control device 400 may be coupled to the end cover 350 by bolting, snap-fitting, adhesion, or the like. Unlike this embodiment, the electrolyte discharge control device 400 may be provided as an integral part with the end cover 350.

In this embodiment, the drain hole 351 and the electrolyte discharge control device 400 are applied to one of the two end covers 350 and 360. However, unlike this embodiment, the drain hole 351 and the electrolyte discharge control device 400 may be applied to both of the two end covers 350 and 360.

Referring to FIGS. 3 and 4, the electrolyte discharge control device 400 according to this embodiment will be described in detail. The electrolyte discharge control device 400 includes a storage tank 410, a first blocking film 420, a second blocking film 430, a block support film 440, and a blocking block 450.

The storage tank 410 covers the drain hole 351 and may be provided in the form of a box that is coupled to the lower end of the end cover 350 and may accommodate a predetermined amount of electrolyte W therein.

In this embodiment, all of four drain holes 351 in the end cover 350 may be covered by the storage tank 410. The internal space of the storage tank 410 may be divided into four spaces. The four internal spaces may be configured to be separated from each other and communicate independently with the four drain holes 351. In this case, the electrolyte W that has flowed into the storage tank 410 through any one drain hole 351 cannot move in the width direction (Y direction) inside the storage tank 410. That is, the storage tank 410 may be configured so that the electrolyte W that has flowed into the storage tank 410 through any one drain hole 351 does not flow back into the other drain holes 351 via the internal space of the storage tank 410.

The first blocking film 420 may be provided to have a size that may form one side surface of the storage tank 410 and cover the drain hole 351 of the end cover 350, as shown in FIG. 4. The second blocking film 430 may be provided to be spaced apart from the first blocking film 420 and form the other side surface of the storage tank 410. The electrolyte discharge control device 400 of this embodiment may include four first blocking films 420 and four second blocking films 430. The four first blocking films 420 may cover four drain holes 351 of the end cover 350 one-to-one, respectively, and may be positioned on one side surface of the storage tank 410. Also, the four second blocking films 430 may be positioned on the other side surface of the storage tank 410 opposite to the four first blocking films 420.

The first blocking film 420 and the second blocking film 430 may be made of a material that may be dissolved and lost in the electrolyte W. For example, the material may be epoxy, water-soluble pulp, bioplastic, etc. Here, the bioplastic may be made of, for example, corn starch, water, fatty acid, oil, etc.

The first blocking film 420 and the second blocking film 430 may be dissolved and lost after a certain time upon contact with the electrolyte W. Accordingly, when the level of the electrolyte W inside the module case 300 rises, the first blocking film 420 blocking the drain hole 351 of the end cover 350 may be dissolved and lost first due to the electrolyte W, so that the electrolyte W may flow into the storage tank 410. Then, when the second blocking film 430 is dissolved and lost due to the electrolyte W flowing into the storage tank 410, the electrolyte W may be discharged to the outside of the storage tank 410.

The first blocking film 420 and the second blocking film 430 include a first region 421, 431 and a second region 423, 433 having different thicknesses, and the thickness (D1) of the first region 421, 431 may be smaller than the thickness (D2) of the second region 423, 433. In addition, the first region 421, 431 may be provided at a lower position than the second region 423, 433.

In this case, the electrolyte W may smoothly pass through the first blocking film 420 and the second blocking film 430 and be discharged to the outside. That is, the first region 421, 431, which has a relatively thin thickness, is lost faster by the electrolyte W than the second region 423, 433, and since the first region 421, 431, which is lost faster, is located lower than the second region 423, 433, which is lost slower, the opening through which the electrolyte W may escape expands from the bottom to the top, thereby securing more smooth drainage.

The first blocking film 420 and the second blocking film 430 according to this embodiment are made of an epoxy material, and the first region may be configured to have a thickness of 100 um to 150 um, and the second region may be configured to have a thickness of 300 um or more.

The block support film 440 may be disposed in the block insert hole 411a formed through the upper plate 411 of the storage tank 410. For example, the block insert hole 411a may be configured to be blocked at the lower end by the block support film 440.

The block support film 440 may be made of a material that may be dissolved and lost by the electrolyte W, like the first blocking film 420 and second blocking film 430 described above.

The blocking block 450 may be configured to be inserted into the block insert hole 411a and supported at the lower end by the block support film 440 and disposed on the upper plate 411 of the storage tank 410. In addition, the blocking block 450 may be provided to fall in the gravity direction when the block support film 440 is lost by the electrolyte W so as to close the flow path S1 between the first blocking film 420 and the second blocking film 430 provided inside the storage tank 410.

A block slot 413 may be provided in the lower plate 412 of the storage tank 410. The block slot 413 may be formed concavely in the lower plate 412 of the storage tank 410 so that the lower end of the blocking block 450 may be inserted therein.

The blocking block 450 may be configured such that when the block support film 440 is lost, it falls due to its own weight so that the lower end of the blocking block 450 is inserted into the block slot 413 and the upper end of the blocking block 450 cannot escape from the block insert hole 411a. In this case, the blocking block 450 is stably positioned inside the storage tank 410 without being swept in the discharge direction of the electrolyte W, thereby blocking the flow of the electrolyte W.

The blocking block 450 may be made of a material that has insulating properties and does not dissolve in the electrolyte W. Preferably, the blocking block 450 may be made of a material with high mechanical strength.

Meanwhile, the thickness (D3) of the block support film 440 may be greater than the thickness (D1) of the first region 431 of the second blocking film 430. This is to allow the block support film 440 to dissolve in the electrolyte W later than the first region 431 of the second blocking film 430. According to this embodiment, the first region 431 of the second blocking film 430 may disappear first, so that a certain amount of electrolyte W may be discharged outside the storage tank 410, and then the block support film 440 may be lost, so that the blocking block 450 may fall. That is, it is preferable that the block support film 440 is configured to withstand the load of the blocking block 450 under normal conditions and have a thickness greater than the first region 431 of the second blocking film 430.

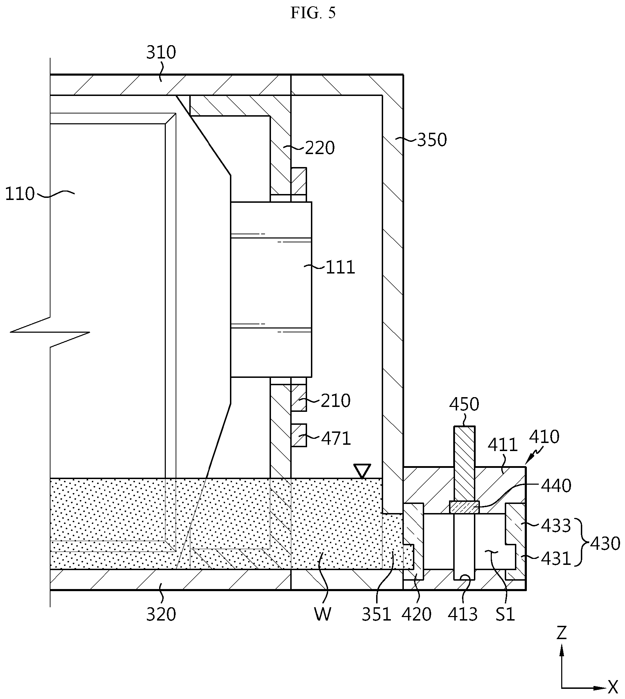

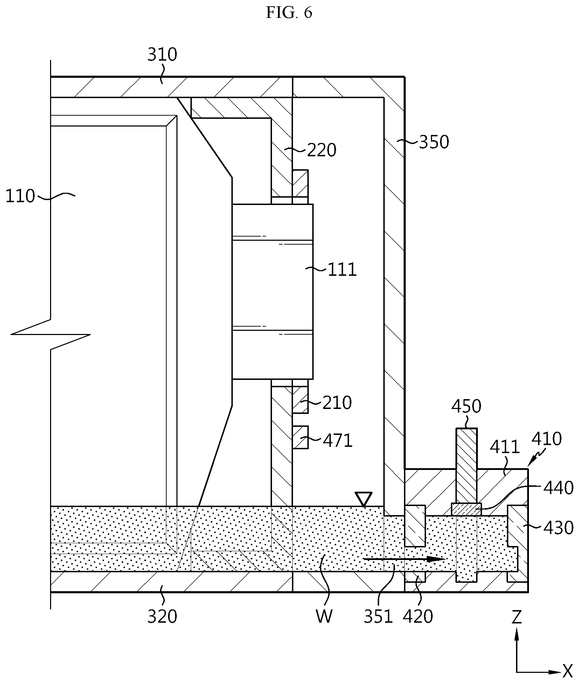

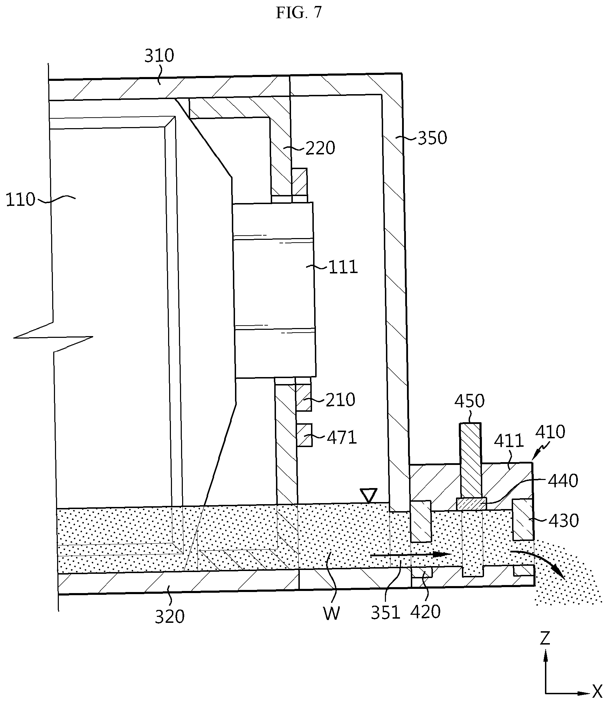

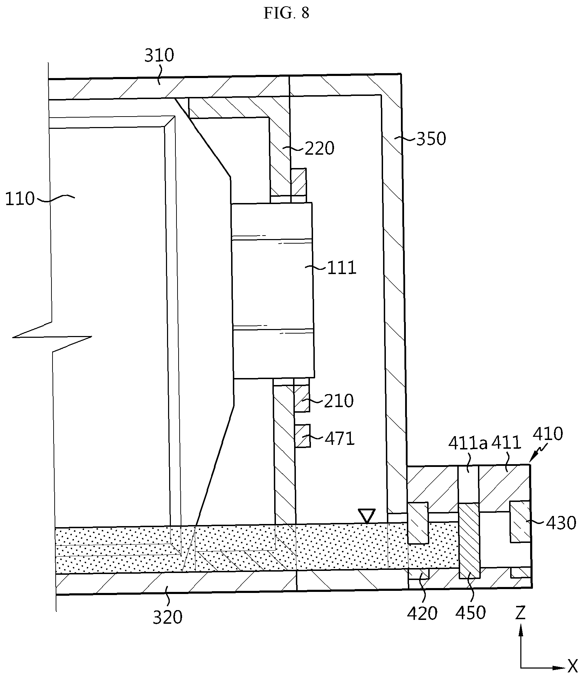

FIG. 5 is a diagram showing a state in which a drain hole 351 is blocked by the electrolyte discharge control device 400 according to an embodiment of the present disclosure, FIG. 6 is a diagram showing a state in which a first blocking film 420 is lost in the electrolyte discharge control device 400 of FIG. 5, FIG. 7 is a diagram showing a state in which a second blocking film 430 is lost in the electrolyte discharge control device 400 of FIG. 6, and FIG. 8 is a diagram showing a state in which a support film is lost and a blocking block 450 is dropped in the electrolyte discharge control device 400 of FIG. 7.

Next, an operation example of the electrolyte discharge control device 400 of the battery module 10 according to an embodiment of the present disclosure will be briefly described with reference to FIGS. 5 to 8.

When a thermal event occurs in the battery cells 110, the gas and the electrolyte W may be emitted from the battery cells 110. If leakage of the electrolyte W in the battery cells 110 is severe, the level of the electrolyte W inside the battery module 10 may increase as shown in FIG. 5. For example, if the level of the electrolyte W rises to the height of the bus bars 210, the battery cells 110 may be short-circuited, causing a second ignition. However, the electrolyte discharge control device 400 according to the present disclosure may lower the level of the electrolyte W inside the battery module 10, thereby preventing the risk of short circuit as described above.

That is, as shown in FIGS. 6 and 7, when the level of the electrolyte W increases and a predetermined period of time passes, the first blocking film 420 and the second blocking film 430 of the electrolyte discharge control device 400 may be sequentially dissolved and lost into the electrolyte W. As a result, the drain hole 351 of the end cover 350 communicates with the outside, and the electrolyte W is discharged to the outside, so that the level of the electrolyte W inside the battery module 10 may be lowered.

If the battery case collapses and the electrolyte W is ejected due to the increased heat and pressure, high-temperature particles (ex: electrode pieces) are mixed with the electrolyte W. For this reason, the first blocking film 420 and the second blocking film 430 may be more easily lost by the electrolyte W.

Meanwhile, if the block support film 440 supporting the blocking block 450 is dissolved and lost by the electrolyte W after the second blocking film 430 is lost, the blocking block 450 may fall in the gravity direction due to its own weight. As described above, the block support film 440 is provided to be thicker than the first region of the second blocking film 430. In addition, the second blocking film 430 is provided to block the flow of the electrolyte W at a position opposite to the flow direction of the electrolyte W, whereas the block support film 440 is provided on the upper plate 411 of the storage tank 410 parallel to the flow direction of the electrolyte W. Accordingly, the block support film 440 may be dissolved and lost by the electrolyte W at least more slowly than the first region of the second blocking film 430.

If the block support film 440 is lost and the blocking block 450 falls in this way, the flow path S1 between the first blocking film 420 and the second blocking film 430 may be closed, as shown in FIG. 8. As a result, the drain hole 351 of the end cover 350 may be shielded and not be able to communicate with the outside of the battery module.

According to this embodiment, when a thermal event occurs in the battery module 10, the electrolyte W may be discharged so that the level of the electrolyte W in the module case 300 does not exceed a certain height. In addition, it is possible to prevent a certain amount or more of electrolyte W outside the battery module 10 from flowing into the battery module 10. That is, even if the electrolyte W outside the battery module 10 makes the second blocking film 430 and the first blocking film 420 be sequentially lost and flows into the module case 300 through the drain hole 351 of the end cover 350, if the level of the electrolyte W exceeds a certain level, the block support film 440 may be lost and the blocking block 450 may fall. Therefore, a certain amount or more of electrolyte W outside the battery module 10 may be prevented from flowing into the battery module 10.

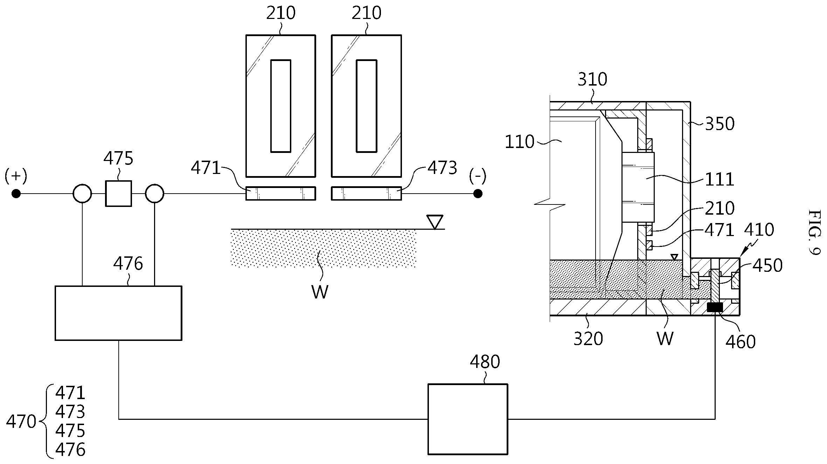

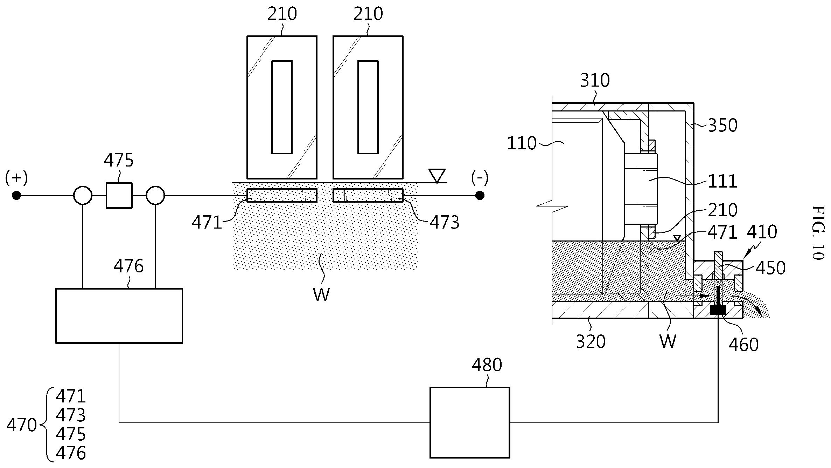

FIGS. 9 and 10 are reference views for explaining an example of operation of an electrolyte discharge control device 400 including a level detection unit 470, as a battery module according to another embodiment of the present disclosure.

The same reference signs as in the former embodiment indicate the same reference signs, and the same reference signs will not be described again, and features different from the former embodiment will be mainly explained.

According to another embodiment of the present disclosure, the electrolyte discharge control device 400 of the battery module 10 may further include an actuator 460 provided to the lower plate 412 of the storage tank 410 to lift the blocking block 450 in an upper direction, a level detection unit 470 configured to detect a level of the electrolyte W inside the module case 300, and a control unit 480 configured to control the actuator 460 to operate based on a signal transmitted from the level detection unit 470.

The actuator 460 is a means for lifting the blocking block 450 by a predetermined height to open the flow path S1 between the first blocking film 420 and the second blocking film 430 again. For example, the actuator 460 may employ a rack and pinion actuator 460 including a small motor and a rack and pinion gear, or a solenoid actuator 460. In addition to the exemplified actuator 460, any actuator having a mechanical or electronic mechanism capable of lifting the blocking block 450 in an upper direction may be used as the actuator 460.

The level detection unit 470 may include a first conductor 471 and a second conductor 473, which are arranged to be spaced apart in a horizontal direction at a predetermined height from the bottom surface of the module case 300, and a current detection unit configured to detect a current flow between the first conductor 471 and the second conductor 473 when the electrolyte W comes into contact with the first conductor 471 and the second conductor 473.

In this embodiment, the first conductor 471 and the second conductor 473 may be positioned below the bus bars 210 and spaced apart from each other so as not to be electrically connected, and may be installed in the bus bar frame 220. The first conductor 471 and the second conductor 473 may be made of a conductive metal such as copper or aluminum, for example. In addition, the first conductor 471 and the second conductor 473 may have any shape or structure as long as they become electrically connected when the level of the electrolyte W rises and simultaneously comes into contact with the electrolyte W. Although not shown for convenience of illustration, the first conductor 471 and the second conductor 473 may be connected to one of the battery cells 110 or to a separate power source for current detection.

The current detection unit may include a shunt resistor 475 and a current detection circuit 476. For example, the shunt resistor 475 may be installed in a path for electrical connection between the first conductor 471 and a positive electrode terminal of a power source or in a path for electrical connection between the second conductor 473 and a negative electrode terminal of the power source. The current detection circuit 476 may be configured to detect current by converting a voltage drop across the shunt resistor 475 into a current value according to Ohm's law, and transmit a first signal to the control unit 480 if the current value is greater than 0 ampere.

The control unit 480 is a component that controls the actuator 460 to operate based on the first signal transmitted from the current detection circuit 476. The control unit 480 and the actuator 460 may be configured to communicate with each other by wire or wirelessly. The control unit 480 may be integrated into a BMS (Battery Management System) typically included in the battery module 10 so that the control unit 480 performs the role of the BMS.

The battery module 10 further including the actuator 460, the level detection unit 470, and the control unit 480 as described above may further perform the following functions.

For example, as shown in FIG. 9, in a situation where the flow path S1 inside the storage tank 410 is closed by the blocking block 450, the electrolyte W may be additionally discharged from the battery cells 110, causing the level of the electrolyte W inside the battery module 10 to rise again.

If the level of the electrolyte W rises to the height of the first conductor 471 and the second conductor 473 as shown in FIG. 10, the first conductor 471 and the second conductor 473 are electrically connected. Then, the current detection circuit 476 detects the electrically connected current and transmits the first signal to the control unit 480. The control unit 480 transmits an operating signal to the actuator 460 based on the first signal, and at this time, the actuator 460 operates to push up the blocking block 450. As a result, the flow path S1 in the storage tank 410 is opened again, so that the electrolyte W may be discharged to the outside of the battery module 10.

Meanwhile, if a certain amount or more of electrolyte W is discharged to the outside of the battery module 10 and the level of electrolyte W falls below the first conductor 471 and the second conductor 473, no current flows between the first conductor 471 and the second conductor 473. In this case, the current detection circuit 476 transmits a second signal to the control unit 480, and the control unit 480 may be configured to transmit a signal to the actuator 460 to control the operation of the actuator 460 so that the blocking block 450 is lowered again after a predetermined time passes after receiving the second signal.

According to the embodiment of the present disclosure, even after the first blocking film 420 and the second blocking film 430 are lost, the level of the electrolyte W inside the battery module 10 may be controlled to be a certain height or lower.

A battery pack according to the present disclosure may include one or more battery modules 10 described above. The battery pack according to the present disclosure may further include a master BMS (Battery Management System) for integrated control of charging and discharging of at least one battery module 10, and a pack case for accommodating the battery modules 10 described above.

The battery pack according to the present disclosure may be used, for example, as a driving energy source for an electric vehicle. That is, the battery pack may be used as an electric energy source that provides a driving power to a motor to operate the vehicle. The battery pack may be charged or discharged by an inverter according to the operation of the motor and/or the internal combustion engine. The battery pack may be charged by a regenerative charging device combined with a brake. The battery pack may be electrically connected to the motor of the vehicle through the inverter.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Also, although terms indicating directions such as upward, downward, left, and right are used in this specification, it is obvious to those skilled in the art that these terms are only for convenience of explanation and may vary depending on the location of the target object or the location of the observer.

## Claims

1. A battery module comprising:
battery cells;
a module case configured to accommodate the battery cells therein and having a drain hole for draining electrolyte leaking from the battery cells; and
an electrolyte discharge control device configured to block the drain hole, the electrolyte discharge control device being configured to open the drain hole for a predetermined time and then block the drain hole when a level of electrolyte inside the module case rises.

2. The battery module according to claim 1,
wherein the electrolyte discharge control device includes:
a storage tank coupled to the module case;
a first blocking film configured to cover the drain hole and forming one side surface of the storage tank;
a second blocking film spaced apart from the first blocking film and forming the other side surface of the storage tank;
a block support film arranged in a block insert hole formed through an upper plate of the storage tank; and
a blocking block having a lower end supported by the block support film to be arranged on the upper plate of the storage tank, the blocking block being configured to fall in a gravity direction to close a flow path between the first blocking film and the second blocking film provided inside the storage tank when the block support film is lost by the electrolyte,
wherein the first blocking film, the second blocking film, and the block support film are made of a material which is dissolved and lost in the electrolyte.

3. The battery module according to claim 2,
wherein the first blocking film and the second blocking film include a first region and a second region with different thicknesses, and the first region is formed with a smaller thickness than the second region and is provided at a lower position than the second region.

4. The battery module according to claim 3,
wherein the first region has a thickness of 100 um to 150 um, and the second region has a thickness of 300 um or more.

5. The battery module according to claim 3,
wherein the block support film has a greater thickness than the first region.

6. The battery module according to claim 2,
wherein the blocking block is made of insulating material.

7. The battery module according to claim 2,
wherein the first blocking film, the second blocking film, and the block support film are made of at least one material among epoxy, water-soluble pulp, and bioplastic.

8. The battery module according to claim 2,
wherein the electrolyte discharge control device has a block slot formed concavely in a lower plate of the storage tank so that a lower end of the blocking block is inserted therein.

9. The battery module according to claim 2,
wherein the electrolyte discharge control device includes:
an actuator provided on a lower plate of the storage tank to lift the blocking block in an upper direction;
a level detection unit configured to detect the level of electrolyte inside the module case; and
a control unit configured to control the actuator to operate based on a signal transmitted from the level detection unit.

10. The battery module according to claim 9,
wherein the level detection unit includes:
a first conductor and a second conductor arranged to be spaced apart from each other in a horizontal direction at a predetermined height from a bottom surface of the module case; and
a current detection unit configured to detect a current flowing between the first conductor and the second conductor when electrolyte come into contact with the first conductor and the second conductor.

11. The battery module according to claim 1, further comprising:
a bus bar frame assembly including a plurality of bus bars for electrically connecting the battery cells and a bus bar frame for supporting the plurality of bus bars; and
an end cover configured to cover the bus bar frame assembly,
wherein the drain hole is provided at a lower end of the end cover.

12. The battery module according to claim 11,
wherein the electrolyte discharge control device is detachably coupled to the lower end of the end cover.

13. A battery pack comprising the battery module according to any one of claims 1 to 12.
